# EUROPEAN PATENT APPLICATION

(11) **EP 4 778 816 A1**
(43) Date of publication of application: **22.07.2026**
(21) Application number: 25223494.3
(22) Date of filing: 15.12.2025
(51) Int. Cl.: B62J 45/00, B62K 11/10, B62M 7/12

(54) **SADDLE-TYPE VEHICLE**

(30) Priority: 16.01.2025 JP 2025005864
(71) Applicant: Suzuki Motor Corporation, Hamamatsu-shi, Shizuoka 432-8611 (JP)
(72) Inventor: KAMBAYASHI, Takahiro, Hamamatsu-shi (JP); OMOSAKO, Takahiro, Hamamatsu-shi (JP)
(74) Representative: Haseltine Lake Kempner LLP

(57) **Abstract**

A saddle-type vehicle includes a floor board that is a low floor board and on which legs of a driver are to be placed in front of a seat, a down frame extending from a head pipe to below the floor board, a pair of side frames extending rearward from a lower end of the down frame, and an electrical component installed below the floor board. The electric component is disposed on an outer side of the pair of side frames in a vehicle width direction.

## Description

### TECHNICAL FIELD

The present invention relates to a saddle-type vehicle.

### BACKGROUND ART

A saddle-type vehicle is provided with a keyless controller as an electrical component. In recent years, saddle-type vehicles that have a keyless controller installed under a seat has been known (see, for example, JP2004-116261A). In the saddle-type vehicle described in JP2004-116261A, radio waves are emitted from an antenna of the keyless controller, and when a driver holding a smart key approaches the saddle-type vehicle, a response signal from the smart key is sent back to the keyless controller. The keyless controller then verifies ID of the smart key and releases various locks.

However, although the radio waves from the smart key can easily reach an area below the seat, when the keyless controller is installed below the seat, there is a problem in that an accommodation space below the seat is narrowed by the keyless controller. In addition, it is desirable to ensure a large accommodation space even for an electrical component that does not have a communication function other than the keyless controller.

### SUMMARY OF INVENTION

Aspect of non-limiting embodiments of the present disclosure relates to provide a saddle-type vehicle in which an electrical component can be installed in an optimal location.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a saddle-type vehicle including:
a floor board that is a low floor board and on which legs of a driver are to be placed in front of a seat;
a down frame extending from a head pipe to below the floor board;
a pair of side frames extending rearward from a lower end of the down frame; and
an electrical component installed below the floor board,
in which the electric component is disposed on an outer side of the pair of side frames in a vehicle width direction.

### BRIEF DESCRIPTION OF DRAWINGS

Exemplary embodiment(s) of the present invention will be described in detail based on the following figures, wherein:
Fig. 1 is a right side view of a saddle-type vehicle according to an example;
Fig. 2 is a perspective view of a front part of the vehicle according to the example;
Fig. 3 is a side view of the front part of the vehicle according to the example;
Fig. 4 is a top view of the front part of the vehicle according to the example; and
Fig. 5 is a bottom view of the front part of the vehicle according to the example.

### DESCRIPTION OF EMBODIMENTS

A saddle-type vehicle according to an aspect of the present invention includes a floor board that is a low floor board and on which legs of a driver is to be placed in front of a seat. A down frame extends from a head pipe to below the floor board, and a pair of side frames extend rearward from a lower end of the down frame. An electrical component is installed below the floor board and disposed on an outer side of the pair of side frames in a vehicle width direction. By installing the electrical component below the floor board, an accommodation space below the seat is not reduced by the electrical component. In addition, a space between the pair of side frames can be effectively used as an installation space for other electrical components. Furthermore, when the electrical component is capable of wireless communication, there will be fewer objects blocking radio waves on the outer sides of the electrical component in the vehicle width direction, and the communication performance of the electrical component will be maintained.

### Embodiment

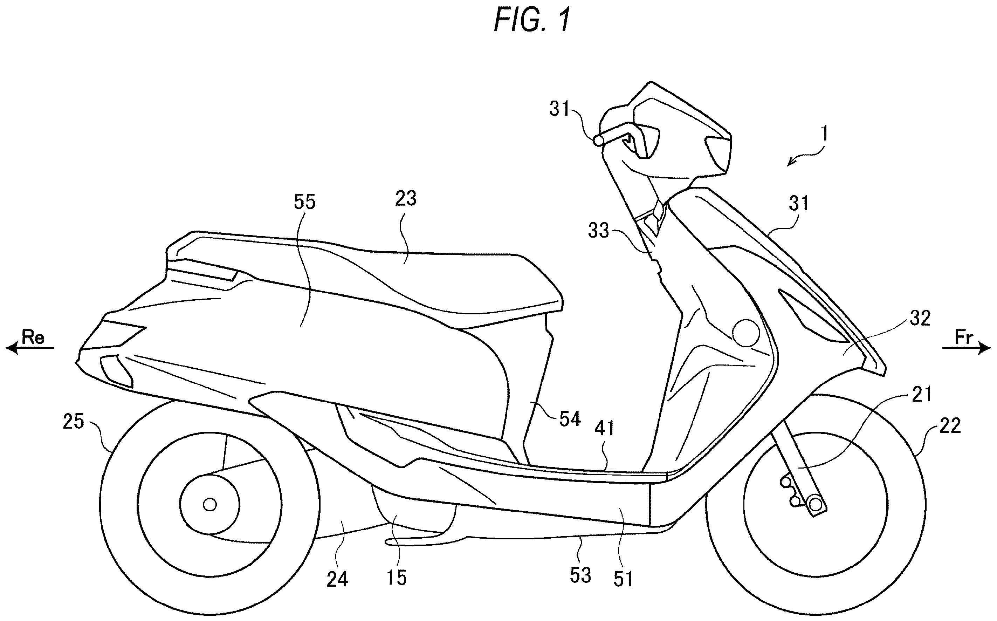

Hereinafter, a saddle-type vehicle according to this example will be described with reference to the accompanying drawings. Fig. 1 is a right side view of the saddle-type vehicle according to this example. In the following drawings, an arrow Fr indicates the front of the vehicle, an arrow Re indicates the rear of the vehicle, an arrow L indicates the left side of the vehicle, and an arrow R indicates the right side of the vehicle.

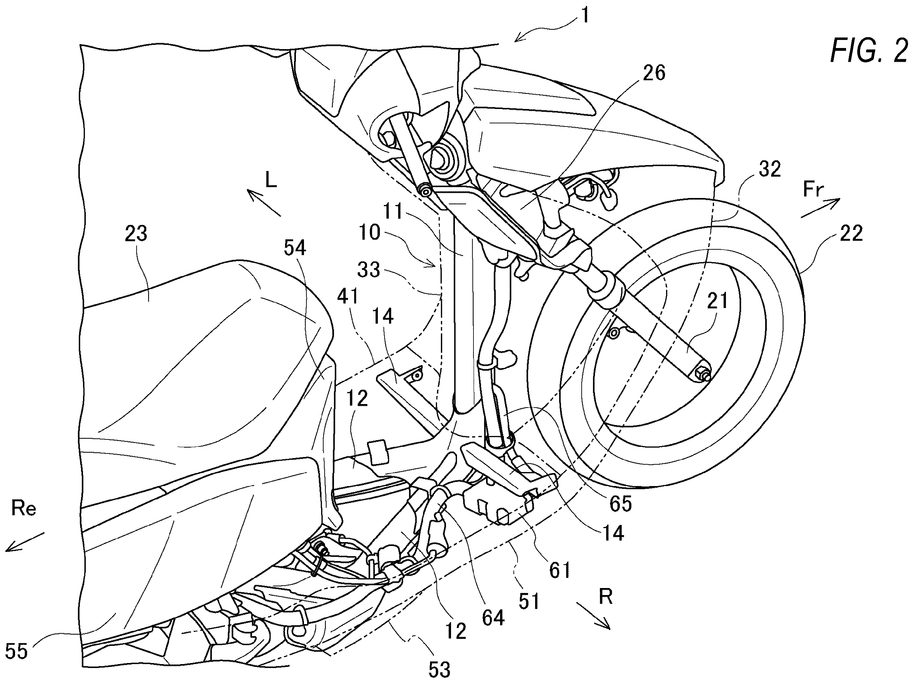

As illustrated in Fig. 1, a saddle-type vehicle 1 is configured by mounting various covers as an exterior of a vehicle body on an underbone-type vehicle body frame 10 (see Fig. 2). A front cover 31 is provided at the front of the vehicle, and a pair of front leg shields 32 and a rear leg shield 33 are provided at the rear of the front cover 31. A floor board 41 extends rearward from a lower end of the rear leg shield 33, and a pair of lower side covers 51 and a lower under cover 53 extend rearward from lower ends of the pair of front leg shields 32. A body cover 54 and a pair of rear side covers 55 are provided on a rear side of the floor board 41.

A front fork 21 protrudes downward from the pair of front leg shields 32, and a front wheel 22 is rotatably supported by the front fork 21. A seat 23 is installed above the body cover 54 and the pair of rear side covers 55, and an accommodation space is formed below the seat 23 inside the body cover 54 and the pair of rear side covers 55. A swing arm 24 equipped with a motor (not illustrated) is provided below the pair of lower side covers 51. The swing arm 24 is swingably connected to a pivot bracket 15 of the vehicle body frame 10, and a rear wheel 25 is rotatably supported at the rear of the swing arm 24.

Incidentally, when a smart key system is adopted in a scooter-type saddle-type vehicle, a keyless controller is often installed under the seat. This makes it harder for the keyless controller to get wet and makes it easier for radio waves from a smart key to reach it, but it also makes it easier for others to reach, making it less deterrent to theft, and the accommodation space is reduced by the keyless controller. For this reason, it is desirable to install the keyless controller in an optimal location taking into consideration waterproofing, communication performance, theft prevention performance, and accommodation space under the seat. Therefore, in this example, the keyless controller is installed under the floor board.

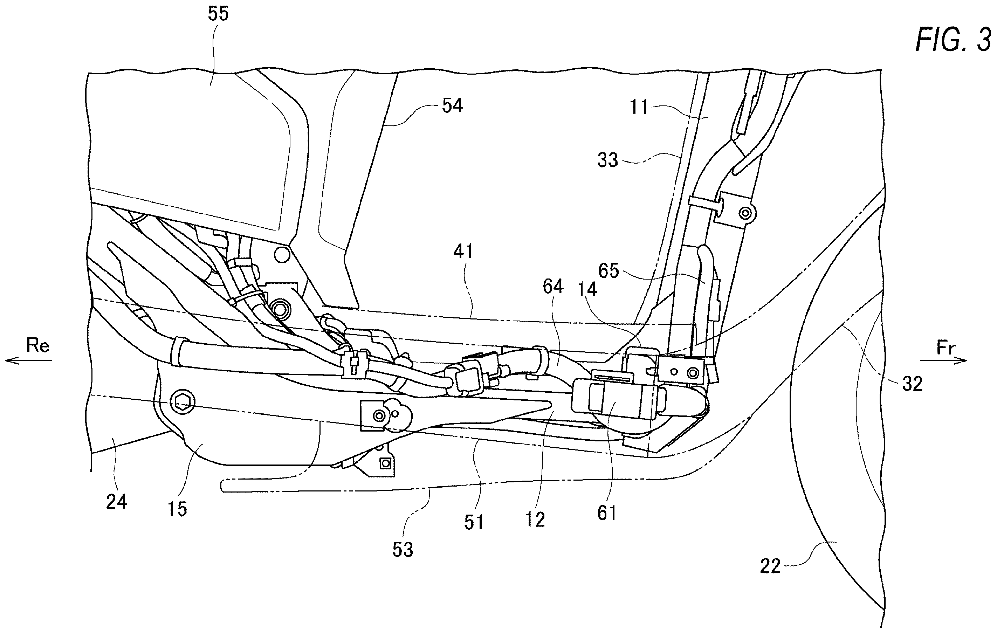

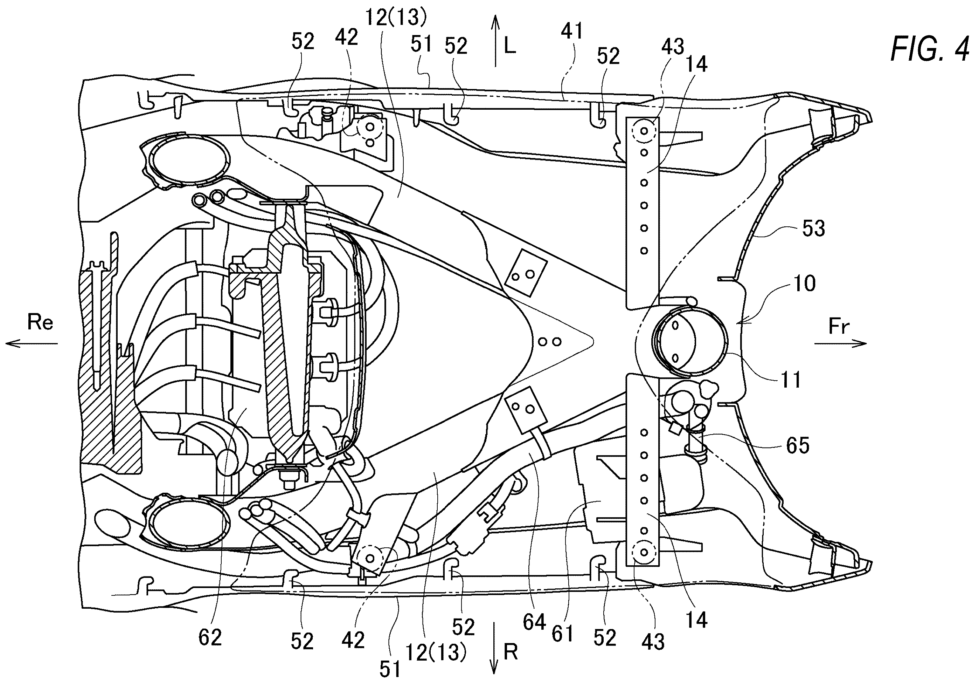

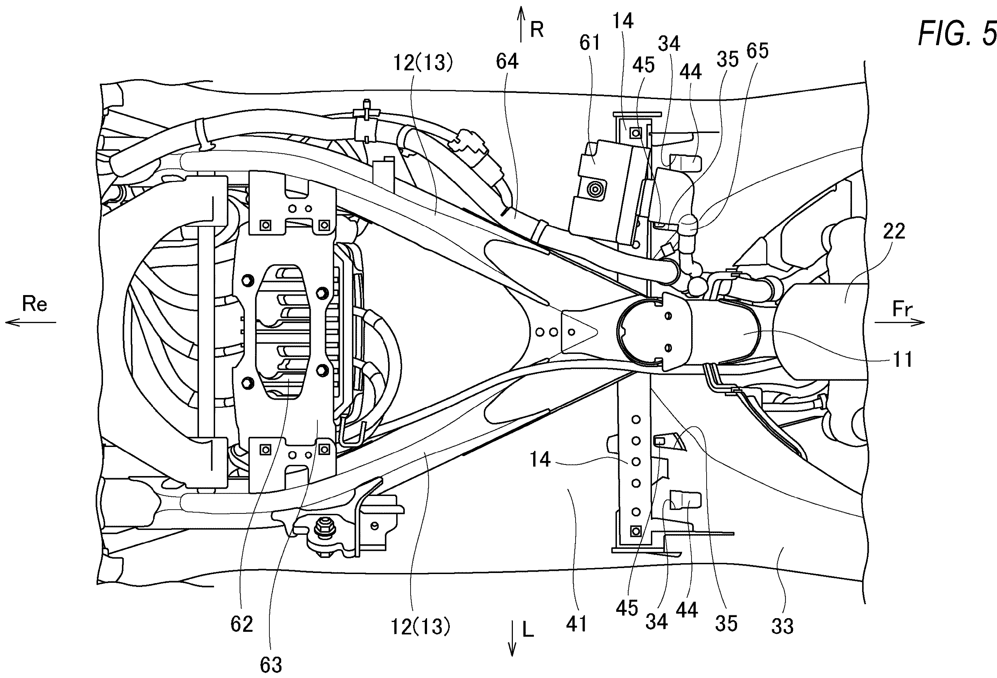

A front structure of the saddle-type vehicle will be described with reference to Figs. 2 to 5. Fig. 2 is a perspective view of a front part of the vehicle according to this example. Fig. 3 is a side view of the front part of the vehicle according to this example. Fig. 4 is a top view of the front part of the vehicle according to this example. Fig. 5 is a bottom view of the front part of the vehicle according to this example. In addition, in Figs. 2 and 3, the front leg shield, rear leg shield, floor board, lower side cover, and lower under cover are indicated by two-dot chain lines. In Fig. 4, the floor board is indicated by a two-dot chain line. In Fig. 5, the lower side cover and the lower under cover are omitted.

As illustrated in Fig. 2, the vehicle body frame 10 includes a down frame 11 that extends from a head pipe (not illustrated) at the front of the vehicle to below the floor board 41, and a pair of side frames 12 that extend rearward from a lower end of the down frame 11. The down frame 11 extends straight through the inside of the rear leg shield 33. The pair of side frames 12 branch off to the left and right from the lower end of the down frame 11, extend rearward, pass below the floor board 41, and then rise obliquely upward to the rear. In addition, an auxiliary frame 14 extends outward in a vehicle width direction from the lower end of the down frame 11.

The pair of front leg shields 32 and the rear leg shield 33 are attached to the head pipe and the down frame 11 via a cover brace 26, and driver's legs are protected by the pair of front leg shields 32 and the rear leg shield 33. The floor board 41 is attached to the pair of side frames 12 and the auxiliary frame 14, and the driver's legs can rest on the floor board 41 as a low floor board in front of the seat 23. The pair of lower side covers 51 and the lower under cover 53 are attached to an underside of the floor board 41. Adjacent covers are fixed to each other by various fixing methods such as screws, hooks, clips, and the like.

A keyless controller 61 and an inverter 62 (see Fig. 5) are provided below the floor board 41, as electrical components. The keyless controller 61 is fixed to one side (the right side) of the auxiliary frame 14. The keyless controller 61 is configured to be capable of wireless communication, and various locks are released by communication between the keyless controller 61 and a smart key carried by the driver, without the driver having to take out the key. The inverter 62 is fixed to inner sides of the pair of side frames 12 via a bracket 63 (see Fig. 5). A motor is connected to the inverter 62, and rotation of the motor is controlled by the inverter 62.

The keyless controller 61 is disposed on an outer side (right side in this example) of the pair of side frames 12 in the vehicle width direction, and an installation space for the inverter 62 is secured inside the pair of side frames 12. The accommodation space below the seat 23 is not reduced by the keyless controller 61 and the inverter 62. The keyless controller 61 is fixed not to the side frame 12 on one side, but to the auxiliary frame 14 at a position away from the side frame 12 on one side. A passage for a harness 64 is provided between the side frame 12 on one side and the keyless controller 61, and the harness 64 is attached along the side frame 12 on one side.

The harness 64 branches off midway, and a cable 65 branching off from the harness 64 is connected to the keyless controller 61. By locating the keyless controller 61 close to the harness 64, the cable 65 is shortened, making the vehicle lighter and reducing costs. Furthermore, by separating the keyless controller 61 from the side frame 12 on one side, radio waves are less likely to be blocked by the side frame 12 made of metal, and the communication performance of the keyless controller 61 is maintained. Since the keyless controller 61 is positioned below the auxiliary frame 14, the auxiliary frame 14 protects the keyless controller 61 from an impact from above.

As illustrated in Figs. 2 and 3, the pair of side frames 12 are covered from above by the floor board 41, are covered from the sides by the pair of lower side covers 51, and are covered from below by the lower under cover 53. The pair of side frames 12 are surrounded by the floor board 41, the pair of lower side covers 51, and the lower under cover 53, and the keyless controller 61 and the inverter 62 are installed in a space surrounded by these covers. The floor board 41, the pair of lower side covers 51, and the lower under cover 53 prevent rainwater in rainy weather and splashes of water while driving from entering the inside of the vehicle body, and directly prevent the keyless controller 61 and the inverter 62 from becoming wet.

In front of the floor board 41, the down frame 11 is covered from the rear by the rear leg shield 33, and the floor board 41 is formed so as to be removable after the pair of lower side covers 51 and the rear leg shield 33 are removed. In order to expose the keyless controller 61 and the inverter 62, the floor board 41 must be removed, but before removing the floor board 41, the pair of lower side covers 51 and the rear leg shield 33 must be removed. Therefore, even when installation locations of the keyless controller 61 and the inverter 62 are known, the cover must be removed, which enhances theft prevention performance.

More specifically, as illustrated in Figs. 4 and 5, a pair of rear corners 42 of the floor board 41 are fixed to the pair of side frames 12 with bolts, and a pair of front corners 43 of the floor board 41 and the pair of lower side covers 51 are fastened together to both ends of the auxiliary frame14 with bolts. In addition, a plurality of hooks 52 are provided on the pair of lower side covers 51, and the plurality of hooks 52 are hung and fastened to a plurality of openings (not illustrated) in the floor board 41. Barbs of the plurality of hooks 52 are directed rearward, and the hooking is released when the pair of lower side covers 51 are slid rearward relative to the floor board 41.

A pair of claws 44 extend forward from a front end of the floor board 41, and a pair of protrusions 45 protrude downward from locations on the inner side of the pair of claws 44 in the vehicle width direction. A pair of hook holes 34 into which the pair of claws 44 fit are formed at a lower end of the rear leg shield 33, and a pair of insertion holes 35 into which the pair of protrusions 45 fit are formed on the inner side of the pair of hook holes 34 in the vehicle width direction. The pair of claws 44 are hooked onto front edges of the pair of hook holes 34, thereby preventing the pair of protrusions 45 from falling out of the pair of insertion holes 35, and the pair of protrusions 45 abut against rear edges of the pair of insertion holes 35, thereby preventing the pair of claws 44 from falling out of the pair of hook holes 34.

In this case, the bolts are removed from the pair of rear corners 42 and the pair of front corners 43 of the floor board 41. The pair of lower side covers 51 are slid rearward, and the hooks of the pair of lower side covers 51 are released from the openings of the floor board 41. In addition, the rear leg shield 33 is removed from the cover brace 26 or the like, and the rear leg shield 33 is tilted slightly rearward with respect to the floor board 41. In this state, the floor board 41 is lifted diagonally upward and rearward, whereby the pair of protrusions 45 come out of the pair of insertion holes 35 and the pair of claws 44 come out of the pair of hook holes 34, and the floor board 41 is removed.

Further, front half portions of the pair of side frames 12 are formed into a pair of widened portions 13 which extend linearly obliquely rearward from the lower end of the down frame 11 so as to increase a distance therebetween. Since the pair of widened portions 13 are not bent, the rigidity against the load acting on the pair of widened portions 13 in the front-rear direction is increased. In the front side of the pair of widened portions 13, an outer side in the vehicle width direction is wider than an inner side in the vehicle width direction of the pair of widened portions 13, but in the rear side of the pair of widened portions 13, the inner side in the vehicle width direction of the pair of widened portions 13 is wider than the outer side in the vehicle width direction. The inverter 62 is disposed on the inside in the vehicle width direction in the rear side of the pair of widened portions 13, and the pair of widened portions 13 protect the inverter 62 from an external impact.

The auxiliary frame 14 extends outward in the vehicle width direction from the lower end of the down frame 11 in the front side of the pair of widened portions 13, and a rear portion of the keyless controller 61 is located in an area partitioned in a V-shape by the pair of widened portions 13 and the auxiliary frame 14 when viewed from above. In top view, the keyless controller 61 is located on the inner side in the vehicle width direction than both ends of the auxiliary frame 14, and the auxiliary frame 14 protects the keyless controller 61 from an impact from the outside in the vehicle width direction. In this manner, the pair of side frames 12 and the auxiliary frame 14 protect the inverter 62 and the keyless controller 61 from an external impact.

In top view, an antenna of the keyless controller 61 is spaced apart from the auxiliary frame 14, and no metal frame is present below the keyless controller 61 or on the outer sides in the vehicle width direction. The floor board 41 made of resin is located above the keyless controller 61, the lower under cover 53 made of resin is located below the keyless controller 61, and the lower side cover 51 made of resin is located outside the keyless controller 61 in the vehicle width direction. Therefore, radio waves are less likely to be blocked above, below, and on the outer sides in the vehicle width direction of the keyless controller 61, and the communication performance of the keyless controller 61 is maintained.

A start switch (not illustrated) is provided on an upper right side of the saddle-type vehicle 1. The keyless controller 61 is installed on the same side as the start switch in the vehicle width direction, and a propagation range of radio waves is wider on the right side of the saddle-type vehicle 1 than on the left side. When the driver approaches the saddle-type vehicle 1 from the right side, the driver's smart key and the keyless controller 61 are easily connected wirelessly, and authentication processing of the smart key is performed. Furthermore, since the start switch can be pressed on the right side of the saddle-type vehicle 1, the series of operations up to starting to drive the saddle-type vehicle 1 can be smoothly carried out.

As described above, according to the saddle-type vehicle 1 of this example, the keyless controller 61 and the inverter 62 are disposed below the floor board 41, so that the accommodation space below the seat 23 is not reduced by the keyless controller 61 and the inverter 62. The keyless controller 61 and the inverter 62 are surrounded by a plurality of covers to improve waterproofing. The floor board 41 can be removed after the pair of lower side covers 51 and the rear leg shield 33 are removed, which improves the theft prevention performance of the keyless controller 61 and the inverter 62. Radio waves around the keyless controller 61 are less likely to be blocked, and communication performance is maintained.

In this example, a keyless controller and an inverter are exemplified as electrical components, but the electrical components may be an Electronic Control Unit (ECU) or an ignition coil as long as the electrical components can be installed under the floor board.

In addition, in this example, a keyless controller is installed as an electrical component with wireless communication function on one side (right side) of the pair of side frames in the vehicle width direction, but electrical components with wireless communication function may also be installed on both sides of the pair of side frames in the vehicle width direction.

Further, in this example, the pair of lower side covers and the lower under cover are formed separately, but the pair of lower side covers and the lower under cover may be integrally formed as a lower cover.

Further, in this example, the auxiliary frame extends outward in the vehicle width direction from the lower end of the down frame, but the auxiliary frame may extend outward in the vehicle width direction from the front ends of the pair of side frames.

In addition, in this example, the rear portion of the keyless controller is disposed within an area defined in a V-shape by the pair of side frames and the auxiliary frame when viewed from above, but it is sufficient that at least a part of the keyless controller is disposed within that area. For example, the entirety of the keyless controller may be disposed within the area defined in a V-shape.

Further, in this example, the keyless controller is fixed to the auxiliary frame, but the keyless controller may be fixed to the floor board.

Further, in this example, the inverter is disposed between the pair of side frames, but the keyless controller may be disposed between the pair of side frames.

Furthermore, an electrical component installation structure of this example is not limited to being adopted in the above-described saddle-type vehicle, but may be adopted in other types of saddle-type vehicles. A saddle-type vehicle is not limited to all vehicles in which a rider sits astride a seat, but also includes scooter-type vehicles in which a rider does not sit astride a seat.

As described above, a first aspect is a saddle-type vehicle including a floor board (41) as a low floor board in front of a seat (23) on which driver's legs can rest, a down frame (11) extending from a head pipe to below the floor board, a pair of side frames (12) extending rearward from a lower end of the down frame, and an electrical component (keyless controller 61) installed below the floor board, where the electrical component is disposed on an outer side of the pair of side frames in a vehicle width direction. According to this configuration, the electrical component is disposed below the floor board, so that the accommodation space below the seat is not reduced by the electrical component. In addition, a space between the pair of side frames can be effectively used as an installation space for other electrical components. Furthermore, when the electrical component is capable of wireless communication, there will be fewer objects blocking radio waves on the outer sides of the electrical component in the vehicle width direction, and the communication performance of the electrical component will be maintained.

In a second aspect, in the first aspect, the electrical component is capable of wireless communication with an external device. According to this configuration, even when the electrical component is installed below the floor board, there are fewer objects blocking radio waves on the outer side of the electrical component in the vehicle width direction, so the communication performance of the electrical component is maintained.

In a third aspect, in the first or second aspect, the saddle-type vehicle further includes a lower cover (lower side cover 51) that surrounds the pair of side frames together with the floor board, where the electrical component is disposed in a space surrounded by the floor board and the lower cover. This configuration directly prevents the electrical component from becoming wet.

In a fourth aspect, in the third aspect, the saddle-type vehicle further includes a leg shield (rear leg shield 33) that is provided in front of the floor board to cover the down frame, where the floor board is removable after the lower cover and the leg shield are removed. According to this configuration, the floor board needs to be removed to expose the electrical component, but before removing the floor board, the pair of lower covers and the leg shield need to be removed. Therefore, even when an installation location of the electrical component is known, the cover must be removed, which enhances theft prevention performance.

In a fifth aspect, in any one of the first to fourth aspects, a harness (64) is attached along one of the pair of side frames. According to this configuration, by locating the electrical component closer to the harness, a cable extending from the harness to the electrical component is shortened, making the vehicle lighter and reducing costs.

In a sixth aspect, in any one of the first to fifth aspects, front half portions of the pair of side frames extend linearly obliquely rearward from the lower end of the down frame so as to increase a distance between the pair of side frames. With this configuration, a sufficient space is ensured on outer sides of front half portions of the pair of side frames in the vehicle width direction. Since the front half portions of the pair of side frames are not bent, the rigidity against a load acting on the pair of side frames in the front-rear direction is increased. When the electrical component is capable of wireless communication, even when the electrical component is installed close to the down frame, radio waves are less likely to be blocked by the side frame and the down frame on the outer sides of the electrical component in the vehicle width direction, and the communication performance of the electrical component is maintained.

In a seventh aspect, in any one of the first to sixth aspects, the saddle-type vehicle further includes an auxiliary frame (14) extending outward in the vehicle width direction from the lower end of the down frame or from front ends of the pair of side frames, where at least a part of the electrical component is disposed within an area defined by the pair of side frames and the auxiliary frame when viewed from above. According to this configuration, the side frames and the auxiliary frame protect the electrical component from an external impact. Furthermore, when the electrical component is capable of wireless communication, radio waves are less likely to be blocked above, below, or on the outer sides of the electrical component in the vehicle width direction, so the communication performance of the electrical component is maintained.

In an eighth aspect, in the seventh aspect, the electrical component is located on an inner side in the vehicle width direction relative to both ends of the auxiliary frame when viewed from above. According to this configuration, the auxiliary frame protects the electrical component from an impact from the outside in the vehicle width direction.

In a ninth aspect, in the seventh or eighth aspect, front half portions of the pair of side frames extend linearly obliquely rearward from the lower end of the down frame so as to increase a distance between the pair of side frames, and at least a part of the electrical component is disposed within an area defined in a V-shape by the pair of side frames and the auxiliary frame when viewed from above. According to this configuration, the electrical component is installed by utilizing the area partitioned into a V-shape. The side frame and the auxiliary frame protect the electrical component from an external impact. Furthermore, when the electrical component is capable of wireless communication, radio waves are less likely to be blocked above, below, or on the outer sides of the electrical component in the vehicle width direction, so the communication performance of the electrical component is maintained.

In a tenth aspect, in any one of the seventh to ninth aspects, the electrical component is fixed to the auxiliary frame. According to this configuration, by fixing the electrical component to the auxiliary frame, the electrical component can be spaced apart from the side frame and the harness can be passed along the side frame. Furthermore, when the electrical component is capable of wireless communication, then by making the electrical component spaced apart from the side frame, radio waves are less likely to be blocked by the side frame, and the communication performance of the electrical component is maintained.

In an eleventh aspect, in any one of the seventh to tenth aspects, the electrical component is located below the auxiliary frame. According to this configuration, the auxiliary frame protects the electrical component from an impact from above.

Although the present example is described, other examples may be made by combining the above-described example and modification examples in whole or in part.

Furthermore, the technology of the present invention is not limited to the above-described example, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

## Claims

1. A saddle-type vehicle comprising:
a floor board that is a low floor board and on which legs of a driver are to be placed in front of a seat;
a down frame extending from a head pipe to below the floor board;
a pair of side frames extending rearward from a lower end of the down frame; and
an electrical component installed below the floor board,
wherein the electric component is disposed on an outer side of the pair of side frames in a vehicle width direction.

2. The saddle-type vehicle according to claim 1, wherein the electrical component is configured to perform wireless communication with an external device.

3. The saddle-type vehicle according to claim 1 or 2, further comprising:
a lower cover that surrounds the pair of side frames, together with the floor board,
wherein the electrical component is disposed in a space surrounded by the floor board and the lower cover.

4. The saddle-type vehicle according to claim 3, further comprising:
a leg shield covering the down frame in front of the floor board,
wherein the floor board is configured to be removed after the lower cover and the leg shield are removed.

5. The saddle-type vehicle according to claim 1 or 2, wherein a harness is attached along one of the pair of side frames.

6. The saddle-type vehicle according to claim 1 or 2, wherein front half portions of the pair of side frames extend linearly obliquely rearward from the lower end of the down frame so as to increase a distance between the pair of side frames.

7. The saddle-type vehicle according to claim 1 or 2, further comprising:
an auxiliary frame extending outward in the vehicle width direction from the lower end of the down frame or from front ends of the pair of side frames,
wherein at least a part of the electrical component is disposed within an area defined by the pair of side frames and the auxiliary frame, when viewed from above.

8. The saddle-type vehicle according to claim 7, wherein the electrical component is located on an inner side of both ends of the auxiliary frame in the vehicle width direction, when viewed from above.

9. The saddle-type vehicle according to claim 7,
wherein front half portions of the pair of side frames extend linearly obliquely rearward from the lower end of the down frame so as to increase a distance between the pair of side frames, and
at least a part of the electrical component is disposed within an area defined in a V-shape by the pair of side frames and the auxiliary frame, when viewed from above.

10. The saddle-type vehicle according to claim 7, wherein the electrical component is fixed to the auxiliary frame.

11. The saddle-type vehicle according to claim 7, wherein the electrical component is located below the auxiliary frame.
